# EUROPÄISCHE PATENTSCHRIFT

(11) **EP 2 497 632 B1**
(45) Veröffentlichungstag und Bekanntmachung des Hinweises auf die Patenterteilung: **19.09.2018**
(21) Anmeldenummer: 12001444.4
(22) Anmeldetag: 02.03.2012
(51) Int. Cl.: B30B 1/26, H02K 7/14

(54) **Antriebseinheit für einen Stanzautomat oder eine Presse**
Drive unit for a automatic stamping machine or a press
Unité d'entraînement pour une machine automatique de découpage ou une presse

(30) Priorität: 11.03.2011 AT 3432011
(43) Veröffentlichungstag der Anmeldung: 12.09.2012
(73) Patentinhaber: Andritz Technology and Asset Management GmbH, 8045 Graz (AT)
(72) Erfinder: Walther, Andreas, Dipl., Ing., 95182 Döhlau/Kautendorf (DE)
(74) Vertreter: Tschinder, Thomas

(56) Entgegenhaltungen:
- EP-A2- 2 228 203
- WO-A1-2009/156199
- DE-A1-102009 029 921
- JP-A- 2006 192 494

## Beschreibung

Den Gegenstand dieser Erfindung bildet eine Antriebseinheit für einen Stanzautomat oder eine Presse zum Bewegen eines Stößels mit mindestens einem Elektromotor, der einen Stator und einen Rotor aufweist, die konzentrisch zueinander angeordnet sind, wobei der Stator drehfest mit dem Pressengestell verbunden ist und eine Abtriebswelle zum Bewegen des Stößels durch den Rotor antreibbar ist.

Antriebe für den Stößel von Stanzautomaten oder Pressen sind hinlänglich bekannt, es handelt sich dabei meist um Spindel-, Exzenter- oder hydraulische Antriebe. Es sind auch Ausführungsformen mit einem Exzenterpressen - Direktantrieb bekannt. So beschreibt die DE 10 2009 029 921 A1 einen Pressendirektantrieb mit zumindest einem Elektromotor, zu dem ein Stator und ein Rotor gehören, die konzentrisch zueinander angeordnet sind. Außerdem umfasst dieser Antrieb einen Exzenter, der als Bestandteil des Rotors ausgebildet ist und mit dem Rotor gemeinsam drehbar gelagert ist. Der Pressenstößel wird dabei über ein Pleuel, das auf dem Exzenter gelagert ist, angetrieben.

Am Stößel ist ein Stanz- oder Umformwerkzeug angeordnet, durch das das Werkstück bearbeitet, zum Beispiel gestanzt oder umgeformt, wird. Für diesen Bearbeitungsvorgang ist eine erhebliche Presskraft des Stößels erforderlich. Bei einer direkten Koppelung des Direktantriebes mit dem Exzenter, wie dies in der DE 10 2009 029 921 A1 beschrieben ist, muss der Elektromotor ein sehr großes Drehmoment aufbringen. Das Drehmoment wird einerseits durch die Breite des Elektromotors (in Richtung der Rotorachse betrachtet) und andererseits durch den Durchmesser des Rotors beeinflusst. Dabei steigt das Drehmoment mit zunehmender Breite des Motors linear an, wohingegen das Drehmoment mit steigendem Radius des Rotor quadratisch ansteigt. Um entsprechende Drehmomente zu erhalten, muss daher der Motor ziemlich groß im Durchmesser sein.

Die JP 2006 192494 A2 offenbart eine Presse, bei der ein Servomotor über ein Zwischengetriebe, eine Schleppkurbel und einen Exzentermechanismus einen Stößel antreibt. Dort ist der Servomotor und das Zwischengetriebe außerhalb des Pressenkopfes angeordnet, dadurch können Wartungsarbeiten besonders einfach durchgeführt werden. Das Dokument DE102009029921 A offenbart eine Antriebseinheit gemäß dem Oberbegriff des Anspruchs 1.

Die DE 10 2009 029 921 A1 offenbart einen Pressenantrieb mit einem elektrischen Direktantrieb, bei dem auf Bewegungsübertragungsmittel wie beispielsweise Zahnräder oder Übersetzungsgetriebe verzichtet wird. Erreicht wird dies dadurch, dass in einem Exzenterantrieb ein Direktantrieb zum Einsatz kommt, welcher unmittelbar auf ein oder mehrere Pleuel wirkt.

Die EP 2 228 203 A2 offenbart eine mechanische Umformpresse, bei der zwischen Servomotor und Exzenter ein Schleppkurbelgetriebe vorgesehen ist. Ziel der Erfindung ist es, den Durchmesser des Direktantriebes zu verkleinern. Gelöst wird diese Aufgabe durch eine neuartige Antriebseinheit für einen Stanzautomaten oder eine Presse, bei der zwischen dem Rotor und der Abtriebswelle eine Schleppkurbel angeordnet ist. Durch die Schleppkurbel kommt es zu einer zusätzlichen Übersetzung. Somit kann der Elektromotor kompakter gebaut werden, er ist kostengünstiger in der Herstellung und energieeffizienter, da bei gleichem maximalen Drehmoment eine kleinere elektrische Anschlussleistung als beim Direktantrieb in der DE 10 2009 029 921 A1 notwenig ist.

Die Verwendung einer Schleppkurbel bietet außerdem den Vorteilt, dass durch die Änderung der Schleppkurbelgeometrie unterschiedliche Drehmomente bei gleichbleibendem Elektromotordurchmesser realisiert werden können. Zusätzlich ist durch den Schleppkurbelantrieb eine feste Bewegungskurve vorgegeben, die durch den Elektromotor, der vorzugsweise als Segmentmotor bzw. als Servomotor ausgebildet ist, verändert werden kann.

Vorzugsweise ist die Schleppkurbel innerhalb des Rotors angeordnet. Dadurch ergibt sich eine besonders kompakte Bauform.

Es ist günstig, wenn der Rotor aus mehreren Rotorsegmenten besteht und wenn die Rotorsegmente Dauermagnete sind.

Es ist sinnvoll, wenn auf der Abtriebswelle ein Exzenter angeordnet ist, wobei auf dem Exzenter ein Pleuel gelagert ist, das zum Antrieb des Stößels dient.

Es ist vorteilhaft, wenn die Achse der Abtriebswelle exzentrisch zur Rotorachse angeordnet ist.

Im Folgenden wird die Erfindung anhand von Zeichnungen beschrieben. Es zeigen:
Fig. 1 eine perspektivische Ansicht eines Pressengestells mit dem erfindungsgemäßen Pressenantrieb;
Fig. 2 eine Detailansicht des Pressenantriebs;
Fig. 3 eine Schnittansicht durch die erfindungsgemäße Antriebseinheit;

Gleiche Bezugszeichen in den einzelnen Figuren bezeichnen jeweils die gleichen Bauteile.

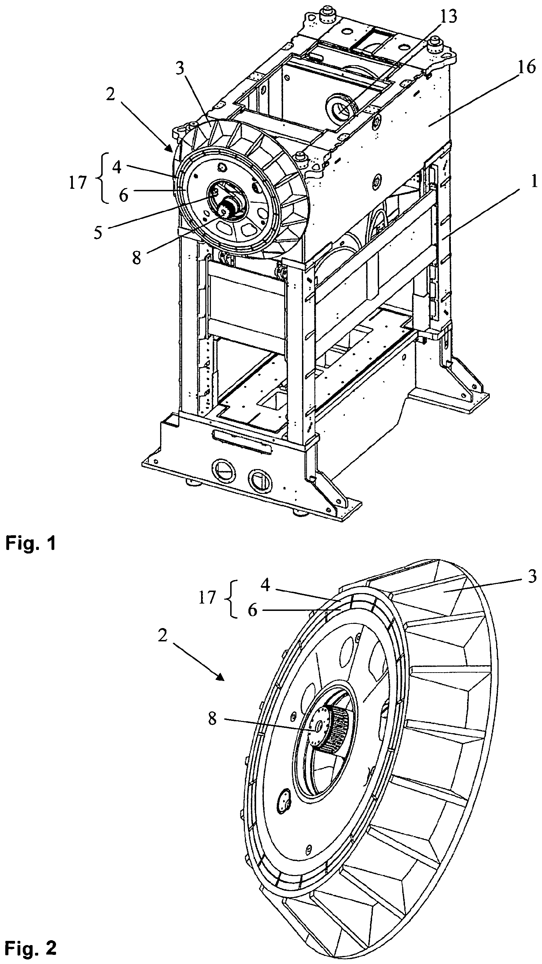

In Figur 1 ist ein Ausführungsbeispiel der erfindungsgemäßen Antriebseinheit dargestellt. Es zeigt ein Pressengestell 1 mit dem erfindungsgemäßen Antrieb 2. Die Antriebseinheit 2 besteht hierbei Wesentlichen aus einem Elektromotor 17, aus einer Abtriebswelle 8 und aus einer Schleppkurbel 5. Der Elektromotor 17 besteht aus einem Stator 4 und aus einem Rotor 6, die konzentrisch zueinander angeordnet sind. Der Stator 4 ist über das Statorgehäuse 3 drehfest mit dem Pressenkopfstück 16 verbunden. Der Rotor 6 ist innerhalb des Stators 4 drehbar gelagert. Die Kraftübertragung vom Rotor 6 zur Abtriebswelle 8 erfolgt über eine Schleppkurbel 5.

In Fig. 2 ist eine Detailansicht des Pressenantriebs 2 dargestellt.

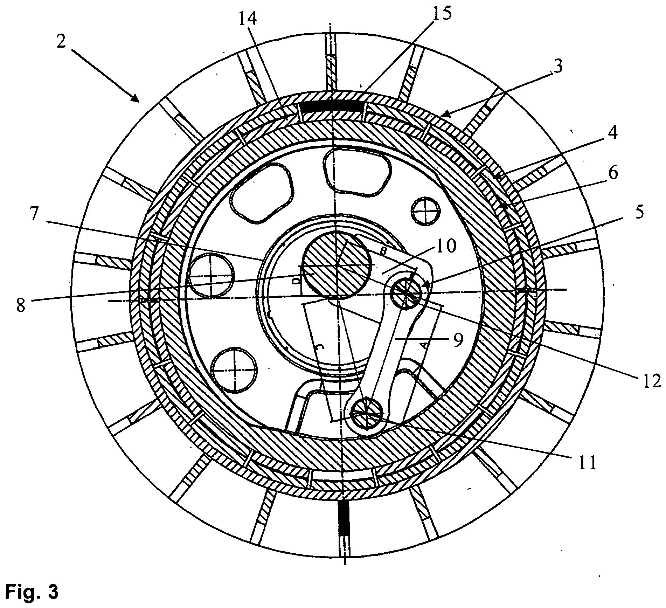

Fig. 3 zeigt eine Schnittansicht durch die Antriebseinheit 2 aus Fig. 2. Die Schleppkurbel 5 besteht aus einem Pleuel 9 und aus der Kurbelwelle 10. Das Pleuel 9 ist an einem Ende über das Pleuellager 11 drehbar mit dem Rotor 6 verbunden. Am anderen Ende ist das Pleuel 9 über das Lager 12 drehbar mit der Kurbelwelle 10 verbunden. Die Kurbelwelle 10 sitzt drehfest auf der Abtriebswelle 8.

Die Geometrie der Schleppkurbel wird durch die Größen A, B, C und D festgelegt. Dabei ist die Größe A der Abstand der Drehachsen zwischen dem Pleuellager 11 und dem Lager 12. Die Größe B bezeichnet den Abstand zwischen den Drehachsen des Lagers 12 und der Abtriebswelle 8. Die Größe C bezeichnet den Abstand zwischen den Drehachsen des Pleuellagers 11 und des Rotors 6. Die Größe D ist ein Maß für die Exzentrizität der Schleppkurbel und bezeichnet den Abstand zwischen den Drehachsen des Rotors 6 und der Abtriebswelle 8.
Durch die Geometrie der Schleppkurbel 5 wird der Verlauf der Drehmomentkurve an der Abtriebswelle 8 beeinflusst. Durch die Änderung der Größen A, B, C oder D kann der Verlauf der Drehmomentkurve beeinflusst und für die jeweilige Anwendung optimiert werden und das unter Beibehaltung des gleichen Elektromotortyps.

Der Rotor ist über die Rotorlagerung 7 drehbar im Statorgehäuse 3 oder im Pressenkopfstück 16 gelagert. Der Rotor 6 und der Stator 4 sind im vorliegenden Beispiel aus Rotorsegmenten 14 bzw. Statorsegmenten 15 aufgebaut.

Im Betrieb wird durch die elektromagnetischen Kräfte zwischen Stator 4 und Rotor 6 der Rotor 6 in Drehung versetzt. Der Rotor 6 überträgt dabei über die Schleppkurbel 5, also über das Pleuel 9 und die Kurbelwelle 10, ein Drehmoment auf die Abtriebswelle 8. Durch die Schleppkurbel 5 kommt es auf einfache Weise zu einem stufenlos variierenden Übersetzungsverhältnis zwischen Rotor 4 und Abtriebswelle 8.
Die Abtriebswelle 8 selbst ist über eine Abtriebswellenlagerung 13 (siehe Fig. 1) im Pressenkopfstück 16 gelagert. Die Kraftübertragung von der Abtriebswelle 8 zum Stößel erfolgt auf herkömmliche Art und Weise. Also beispielsweise über einen Exzenter, der auf der Abtriebswelle 8 angeordnet ist und über ein Pleuel, das auf dem Exzenter gelagert ist. Das Pleuel treibt dann den Stößels an.
Es ist aber auch denkbar, dass zwischen der Abtriebswelle 8 und dem Stößel ein weiteres Getriebe angeordnet ist.

Die in den Zeichnungen dargestellten Ausführungsformen stellen lediglich eine bevorzugte Ausführung der Erfindung dar. Die Erfindung umfasst auch andere Ausführungsformen, bei denen beispielsweise mehrere erfindungsgemäße Antriebseinheiten 2 zum Antrieb eines Stößel verwendet werden oder bei denen die Antriebseinheit 2 nicht im Pressenkopfstück 16 sondern im Pressenfuß angeordnet ist.

## Patentansprüche

1. Antriebseinheit für einen Stanzautomat oder eine Presse zum Bewegen eines Stößels mit mindestens einem Elektromotor (17), der einen Stator (4) und einen Rotor (6) aufweist, die konzentrisch zueinander angeordnet sind, wobei der Stator (4) drehfest mit einem Pressengestell verbunden ist und eine Abtriebswelle (8) zum Bewegen des Stößels durch den Rotor (6) antreibbar ist, **dadurch gekennzeichnet, dass** zwischen dem Rotor (6) und der Abtriebswelle (8) eine Schleppkurbel (5) angeordnet ist.

2. Antriebseinheit nach Anspruch 1, **dadurch gekennzeichnet, dass** die Schleppkurbel (5) an einem Ende direkt mit dem Rotor (6) verbunden ist.

3. Antriebseinheit nach Anspruch 2, **dadurch gekennzeichnet, dass** die Schleppkurbel (5) innerhalb des Rotors (6) angeordnet ist.

4. Antriebseinheit nach einem der Ansprüche 1 bis 3, **dadurch gekennzeichnet, dass** der Rotor (6) aus mehreren Rotorsegmenten (14) besteht.

5. Antriebseinheit nach Anspruch 4, **dadurch gekennzeichnet, dass** die Rotorsegmente (14) Dauermagnete sind.

6. Antriebseinheit nach einem der Ansprüche 1 bis 5, **dadurch gekennzeichnet, dass** auf der Abtriebswelle (8) ein Exzenter angeordnet ist, wobei auf dem Exzenter ein Pleuel gelagert ist, das zum Antrieb des Stößels dient.

7. Antriebseinheit nach einem der Ansprüche 1 bis 6, **dadurch gekennzeichnet, dass** die Achse der Abtriebswelle (8) exzentrisch zur Rotorachse angeordnet ist.

## Claims

1. Drive unit for a punching machine or a press for moving a ram with at least one electric motor (17) that has a stator (4) and a rotor (6) arranged concentrically to one another, where the stator (4) has a torque-proof connection to a press frame and a drive shaft (8) for moving the ram can be driven by the rotor (6), **characterised in that** a drag link (5) is positioned between the rotor (6) and the drive shaft (8).

2. Drive unit according to claim 1, **characterised in that** the drag link (5) is connected directly to the rotor (6) at one end.

3. Drive unit according to claim 2, **characterised in that** the drag link (5) is arranged inside the rotor (6).

4. Drive unit according to one of claims 1 to 3, **characterised in that** the rotor (6) consists of several rotor segments (14).

5. Drive unit according to claim 4, **characterised in that** the rotor segments (14) are permanent magnets.

6. Drive unit according to one of claims 1 to 5, **characterised in that** an eccentric is mounted on the drive shaft (8), where a connecting rod that serves to drive the drag link is supported on the eccentric.

7. Drive unit according to one of claims 1 to 6, **characterised in that** the drive shaft (8) axle is arranged eccentrically to the rotor axle.

## Revendications

1. Unité d'entraînement pour une machine automatique de découpage ou une presse destinée à déplacer un poussoir ayant au moins un moteur électrique (17), qui présente un stator (4) et un rotor (6), qui sont disposés de manière concentrique l'un par rapport à l'autre, le stator (4) étant relié solidaire en rotation avec un châssis de presse et un arbre d'entraînement (8) destiné à déplacer le poussoir étant entraîné par le rotor (6), **caractérisée en ce qu'**entre le rotor (6) et l'arbre d'entraînement (8) est disposée une manivelle d'entraînement (5).

2. Unité d'entraînement selon la revendication 1, **caractérisée en ce que** la manivelle d'entraînement (5) est reliée par une extrémité directement au rotor (6).

3. Unité d'entraînement selon la revendication 2, **caractérisée en ce que** la manivelle d'entraînement (5) est disposée à l'intérieur du rotor (6).

4. Unité d'entraînement selon l'une des revendications 1 à 3, **caractérisée en ce que** le rotor (6) est constitué de plusieurs segments (14) de rotor.

5. Unité d'entraînement selon la revendication 4, **caractérisée en ce que** les segments (14) de rotor sont des aimants permanents.

6. Unité d'entraînement selon l'une quelconque des revendications 1 à 5, **caractérisée en ce que** sur l'arbre d'entraînement (8) est disposé un excentrique, sur l'excentrique est montée une bielle qui sert à entraîner le poussoir.

7. Unité d'entraînement selon l'une des revendications 1 à 6, **caractérisée en ce que** l'axe de l'arbre d'entraînement (8) est ménagé de manière excentrique par rapport à l'axe de rotor.
